# EUROPEAN PATENT SPECIFICATION

(11) **EP 0 993 772 B1**
(45) Date of publication and mention of the grant of the patent: **27.03.2002**
(21) Application number: 99203226.8
(22) Date of filing: 04.10.1999
(51) Int. Cl.: A01K 15/02, A01K 9/00

(54) **An implement for feeding young animals**
Fütterungsvorrichtung für junge Tiere
Dispositif d'alimentation pour des animaux jeunes

(30) Priority: 13.10.1998 NL 1010304
(43) Date of publication of application: 19.04.2000
(73) Proprietor: MAASLAND N.V., 3155 PD Maasland (NL)
(72) Inventor: van der Lely, Olaf, 6300 Zug (CH); van der Lely, Alexander, 3065 NA Rotterdam (NL); van den Berg, Karel, 2971 BR Bleskensgraaf (NL)
(74) Representative: Corten, Maurice Jean F.M.

(56) References cited:
- EP-A- 0 064 597
- EP-A- 0 189 954
- WO-A-96/19917
- SU-A- 1 701 206

## Description

The invention relates to an implement for feeding young animals, such as calves, which implement comprises a metering device and means giving the implement the characteristics of a milking robot, said means comprising a movable robot arm construction with a movable robot arm.

Such an implement is known e.g. from EP-A-0189954.

Such implements have the disadvantage of not making the young animal used to automatic milking by a milking robot. For that reason, the young animals, once being mature and functioning as milk production animals, need a period of some weeks to get accustomed to a milking robot. The animals not only produce less milk in this period, but require a continuous supervision, which is very time-consuming. In practice it appears that approximately 10 percent of the cows are unable to adapt themselves to automatic milking by means of a milking robot, which results in a permanent loss of milk production.

The invention aims at obviating these drawbacks. For that purpose the implement is characterized in that the movable robot arm is provided with said metering device and in that said metering device is constituted by a drinking nipple and/or a feeding trough. Although the implement is not a milking robot, the implement itself and the surroundings thereof give characteristics of a milking robot.

From SU-A-1701206 the application of calf training for milking is known, however, the implement described therein does not relate to accustoming to a milking robot.

The metering device is moved by the movable robot arm and the movable robot arm construction to the level of the young animal's mouth. The metering device is constituted by a drinking nipple and/or a feeding trough. This drinking nipple simplifies feeding in that the young animal is able to suck on a nipple resembling a teat of a mother cow. In a preferred embodiment, the drinking nipple is made of a flexible material. Furthermore, the feeding trough makes the animal used to a milking robot. According to again another inventive feature, the robot arm construction is provided with a supporting unit which is movable in the longitudinal direction of the implement along at least one rail, relative to which supporting unit the pivotable portion of the robot arm construction is pivotable in sideward direction. According to a further inventive feature, the sidewards pivotable portion of the robot arm construction is pivotable in sideward direction relative to the implement with the aid of an air cushion and/or a cylinder, disposed between said pivotable portion and the supporting unit. In comparison with a cylinder, an air cushion has the advantage of functioning more cheaply and reliably than a cylinder.

According to another aspect of the invention, the implement comprises a dummy robot arm construction and/or a dummy robot arm. Such a robot arm construction and/or robot arm has the external and/or acoustic and/or odorous characteristics of a movable robot arm construction and/or a movable robot arm and can moreover be movable. Finally the implement may be provided with loudspeakers producing the sounds of a milking robot and/or may be characterized by the presence of lubricants and disinfecting liquids to give the implement the odour of a milking robot.

According to another inventive feature, the implement is provided with identification means. By means of these identification means it is possible to distinguish the young animals one from another. According to again another aspect of the invention, the young animal is fed provided that a preset time has elapsed since its last feeding.

In accordance with another inventive feature, the invention relates to a method of feeding young animals by means of an implement as described above, characterized in that the time spent by the young animal in the implement corresponds to the time spent by an animal in a milking robot. This has the advantage that the young animal, such as a calf, is able to get accustomed to the period of time spent by an animal, such as a dairy cow, in a milking robot for being milked. The time spent by the young animal in the implement can be prolonged per feeding. In a preferred embodiment, the time spent by the young animal in the implement can be prolonged gradually, so that the young animal will spend less time in the implement at a very early age than at a more advanced age.

The invention will now be explained in further detail with reference to the drawings of an exemplary embodiment of an implement according to the invention.
Figure 1 is a front view of an implement according to the invention;
Figure 2 is a front view of a milking robot, and
Figure 3 is a side view of a movable robot arm construction.

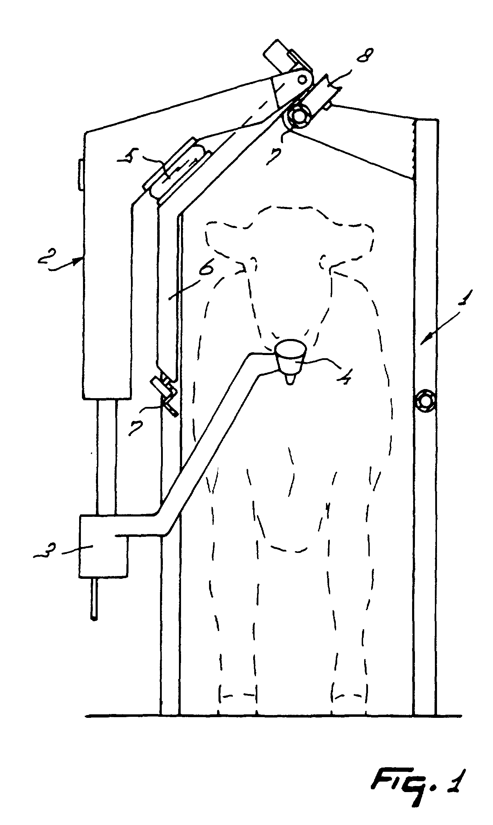

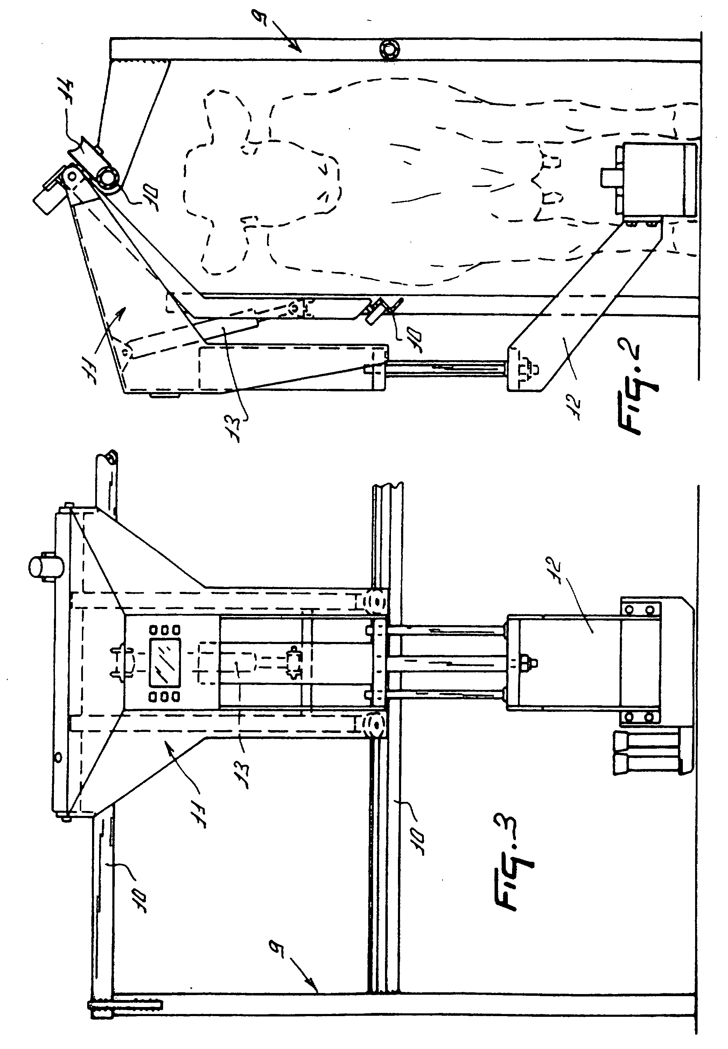

The embodiment according to Figure 1 shows the implement 1. The implement has the external features of a milking robot 9 as shown in Figure 2. Such a milking robot is known from EP-0 848 588. The implement comprises a movable robot arm construction 2 with a movable robot arm 3 which is provided with a metering device 4. The milking robot is also provided with a movable robot arm construction 11 with a movable robot arm 12. In this embodiment both the implement 1 and the milking robot 9 are provided with two rails 7, 10, along which a supporting unit 6, 15 is capable of moving in the longitudinal direction of the animal (Figures 1, 2 and 3). The movable robot arm construction 2 of the implement and the movable robot arm construction 11 of the milking robot 9 are capable of pivoting around a running wheel 8, 14, respectively, in the transverse direction of the animal (Figures 1, 2 and 3). The young animal is able to get accustomed to the external, acoustic and odorous characteristics of the milking robot 9, because of the fact that the construction of the implement 1 has the same characteristics and comprises the same components as the milking robot 9.

The pivoting movement of the robot arm construction can take place by means of a cylinder 13 as represented in the embodiment of the milking robot 9 (Figures 2 and 3), or by means of an air cushion 5, as shown in the embodiment of the implement 1 according to Figure 1. In comparison with a cylinder, an air cushion 5 has the advantage of being cheaper and functioning more reliably than a cylinder 13.

In an embodiment of the invention, the implement 1 may also be provided with a dummy robot arm construction 2 and a dummy robot arm 3, which can be movable and which are provided with means making the dummy robot arm construction, the dummy robot arm, respectively, resemble the movable robot arm construction, the movable robot arm of the milking robot 9, respectively, as to the external, acoustic and odorous aspects. For that purpose, in an embodiment of the invention, in the implement 1 there may be disposed loudspeakers simulating the sound of a milking robot 9.

## Claims

1. An implement for feeding young animals, such as calves, which implement comprises a metering device (4) and means giving the implement (1) the characteristics of a milking robot (9), said means comprising a movable robot arm construction (2) with a movable robot arm (3), **characterized in that** the movable robot arm (3) is provided with said metering device (4)and **in that** said metering device (4) is constituted by a drinking nipple and/or a feeding trough.

2. An implement as claimed in claim 1, **characterized in that** the robot arm construction (2) is provided with a supporting unit (6) which is movable in the longitudinal direction of the implement (1) along at least one rail (7), relative to which supporting unit (6) the pivotable portion of the robot arm construction (2) is pivotable in sideward direction.

3. An implement as claimed in any one of the preceding claims, **characterized in that** the sidewards pivotable portion of the robot arm construction (2) is pivotable in sideward direction relative to the implement with the aid of an air cushion (5) and/or a cylinder, disposed between said pivotable portion and the supporting unit (6).

4. An implement as claimed in any one of the preceding claims, **characterized in that** the implement is provided with a dummy robot arm construction and/or a dummy robot arm.

5. An implement as claimed in any one of the preceding claims, **characterized in that** the implement is provided with identification means.

6. An implement as claimed in any of the preceding claims, **characterized in that** the implement is provided with loudspeakers producing the sounds of a milking robot.

7. An implement as claimed in any of the preceding claims, **characterized by** the presence of lubricants and disinfecting liquids to give the implement the odour of a milking robot.

8. A method of feeding young animals by means of an implement as claimed in any one of the preceding claims, **characterized in that** the time spent by the young animal in the implement corresponds to the time spent by an animal in a milking robot.

9. A method as claimed in claim 8, **characterized in that** the time spent by the young animal in the implement is increased per feeding.

10. A method as claimed in claim 8 or 9, **characterized in that** the young animal is fed provided that a preset time has elapsed since its last feeding.

## Patentansprüche

1. Gerät zum Füttern von Jungtieren, wie z.B. Kälbern, wobei das Gerät eine Dosiervorrichtung (4) sowie eine Vorrichtung umfaßt, die dem Gerät (1) die Merkmale eines Melkroboters (9) verleiht, wobei die Vorrichtung eine bewegbare Roboterarm-Konstruktion (2) mit einem bewegbaren Roboterarm (3) umfaßt,
**dadurch gekennzeichnet, daß** der bewegbare Roboterarm (3) mit der Dosiervorrichtung (4) versehen ist, und daß die Dosiervorrichtung (4) durch einen Sauger und/oder einen Futtertrog gebildet ist.

2. Gerät nach Anspruch 1,
**dadurch gekennzeichnet, daß** die Roboterarm-Konstruktion (2) mit einer Stützeinheit (6) versehen ist, die in Längsrichtung des Gerätes (1) auf mindestens einer Schiene (7) bewegbar ist, wobei der schwenkbare Teil der Roboterarm-Konstruktion (2) relativ zu der Stützeinheit (6) in seitlicher Richtung schwenkbar ist.

3. Gerät nach einem der vorhergehenden Ansprüche,
**dadurch gekennzeichnet, daß** der seitwärts schwenkbare Teil der Roboterarm-Konstruktion (2) relativ zu dem Gerät in seitlicher Richtung mit Hilfe eines zwischen dem schwenkbaren Teil und der Stützeinheit (6) angeordneten Luftkissens (5) und/oder eines Zylinders schwenkbar ist.

4. Gerät nach einem der vorhergehenden Ansprüche,
**dadurch gekennzeichnet, daß** das Gerät mit einer Pseudoroboterarm-Konstruktion und/oder einem Pseudoroboterarm versehen ist.

5. Gerät nach einem der vorhergehenden Ansprüche,
**dadurch gekennzeichnet, daß** das Gerät mit einer Identifikationsvorrichtung versehen ist.

6. Gerät nach einem der vorhergehenden Ansprüche,
**dadurch gekennzeichnet, daß** das Gerät mit Lautsprechern versehen ist, die die Töne eines Melkroboters hervorbringen.

7. Gerät nach einem der vorhergehenden Ansprüche,
**gekennzeichnet durch** das Vorhandensein von Schmiermitteln und Desinfektionsflüssigkeiten, um dem Gerät den Geruch eines Melkroboters zu verleihen.

8. Verfahren zum Füttern von Jungtieren mittels eines Gerätes nach einem der vorhergehenden Ansprüche,
**dadurch gekennzeichnet, daß** die von dem Jungtier in dem Gerät verbrachte Zeit der Zeit entspricht, die ein Tier in einem Melkroboter verbringt.

9. Verfahren nach Anspruch 8,
**dadurch gekennzeichnet, daß** die Zeit, die das Jungtier in dem Gerät verbringt, durch Füttern verlängert wird.

10. Verfahren nach Anspruch 8 oder 9,
**dadurch gekennzeichnet, daß** das Jungtier gefüttert wird, wenn eine vorgegebene Zeit seit seiner letzten Fütterung verstrichen ist.

## Revendications

1. Dispositif destiné à alimenter des animaux jeunes, tels que des veaux, ledit dispositif comprenant un appareil de mesure (4) et des moyens conférant au dispositif (1) les caractéristiques d'un robot de traite (9), lesdits moyens comprenant une structure de bras robotisé déplaçable (2) avec un bras robotisé déplaçable (3), **caractérisé en ce que** le bras robotisé déplaçable (3) est muni dudit appareil de mesure (4) et **en ce que** ledit appareil de mesure (4) est constitué d'un téton d'alimentation en liquides et d'une mangeoire.

2. Dispositif selon la revendication 1, **caractérisé en ce que** la structure de bras robotisé (2) est munie d'une unité de support (6) qui est déplaçable dans la direction longitudinale du dispositif (1) le long d'au moins un rail (7), unité de support (6) par rapport à laquelle la partie pivotable. de la structure de bras robotisé (2) est pivotable en direction latérale.

3. Dispositif selon l'une quelconque des revendications précédentes, **caractérisé en ce que** la partie pivotable en direction latérale de la structure de bras robotisé (2) est pivotable en direction relative par rapport au dispositif avec l'aide d'un coussin à air (5) et/ou d'un cylindre, disposé(s) entre ladite partie pivotable et l'unité de support (6).

4. Dispositif selon l'une quelconque des revendications précédentes, **caractérisé en ce que** le dispositif est muni d'une structure de bras robotisé factice et/ou d'un bras robotisé factice.

5. Dispositif selon l'une quelconque des revendications précédentes, **caractérisé en ce que** le dispositif est muni de moyens d'identification.

6. Dispositif selon l'une quelconque des revendications précédentes, **caractérisé en ce que** le dispositif est muni de hauts-parleurs produisant les sons d'un robot de traite.

7. Dispositif selon l'une quelconque des revendications précédentes, **caractérisé par** la présence de lubrifiants et de liquides désinfectants destinés à conférer au dispositif l'odeur d'un robot de traie.

8. Procédé pour alimenter des animaux jeunes au moyen d'un dispositif selon l'une quelconque des revendications précédentes, **caractérisé en ce que** le temps passé par l'animal jeune dans le dispositif correspond au temps passé par un animal dans un robot de traite.

9. Procédé selon la revendication 8, **caractérisé en ce que** le temps passé par le jeune animal dans le dispositif est augmenté à chaque alimentation.

10. Procédé selon la revendication 8 ou 9, **caractérisé en ce que** l'animal jeune est alimenté à la condition qu'un temps prédéterminé se soit écoulé depuis sa dernière alimentation.
